# EUROPEAN PATENT SPECIFICATION

(11) **EP 1 529 825 B1**
(45) Date of publication and mention of the grant of the patent: **16.06.2010**
(21) Application number: 04025388.2
(22) Date of filing: 26.10.2004
(51) Int. Cl.: C09J 5/06, C09J 11/04, C08K 3/08, H05B 6/64

(54) **Production process of hot-melt adhesives to be activated with micro-waves**
Verfahren zur Herstellung von Heissschmelzklebern, die mit Mikrowellen aktivierbar sind
Procédé pour la préparation d'adhésifs thermofusibles pouvant être activés par des micro-ondes

(30) Priority: 31.10.2003 IT TO20030854
(43) Date of publication of application: 11.05.2005
(73) Proprietor: C.R.F. Società Consortile per Azioni, 10043 Orbassano (TO) (IT)
(72) Inventor: Carotenuto, Gianfranco, Strada Torino 50 10043 Orbassano (IT); Martorana, Brunetto, Strada Torino 50 10043 Orbassano (IT); Perlo, Piero, Strada Torino 50 10043 Orbassano (IT); Butera, Francesco, 10100 Torino (IT); Nicolais Luigi,, Strada Torino 50, 10043 Orbanasso (IT)
(74) Representative: Freyria Fava, Cristina

(56) References cited:
- EP-A- 0 113 281
- EP-A- 0 424 132
- WO-A-02/13580
- US-A- 5 925 166

## Description

The present invention relates to hot melt adhesives and in particular to processes for producing said adhesives.

Hot melt adhesives are solvent-free glues based on thermoadhesive matrixes or thermoplastic polymers that need to be melted in order to express their adhesive power. Adhesion between the parts to be glued occurs when the hot melt adhesive gets back to its solid state.

Hot melt adhesives are used in various industrial manufacturing processes; they are used for instance in the building industry for joining wood panels; in the textile industry for joining flexibly fabrics (particularly important when manufacturing sports shoes, waterproof boots and other sports items); in the packaging field for manufacturing cardboards, boxes, envelopes, bags, disposable items (e.g. handkerchiefs, paper items in general), cigarettes, labels and stamps; in the automotive industry for assembling structural airplane parts, parts of motor vehicles, boats, buses and caravans.

In order to express their adhesive power, hot melt adhesives should be heated to a temperature generally above 80°C, so that they can pass from solid to liquid viscous state. Said heating is carried out as a rule by means of a pre-baking treatment in a traditional oven.

This type of heating, however, has some drawbacks, above all when the parts to be glued are made of plastic materials with low melting temperatures, which can be deformed during heating.

A solution to this type of problem has been found with the use of hot melt adhesives that can be activated with high frequency (about 27 MHz) or microwave (2400 MHz) heating systems, as described in US-A-4 906 497, FR-A-2 555 188, or furthermore in US-A-5 718 356 or in US-A-5 433 804.

These heating systems enable a high reduction of adhesive heating and melting time, from about 20-30 minutes required for traditional heating to few dozens of seconds.

Microwave heating further causes the heating and melting only of the adhesive, almost without altering the temperature of the surfaces involved in the joining area in contact with said adhesive.

These alternative heating systems can be used thanks to the use of electrically conductive substances dispersed more or less homogeneously into the thermoadhesive matrix constituting the adhesive. These electrically conductive substances can be chosen among graphite, carbon fibers, metal powders such as aluminum, copper or iron powders, metal salts, or even metal oxides or halides.

These electrically conductive substances enable a rapid heat generation inside the polymeric matrix by exploiting the formation - thanks to the oscillating electric field generated by microwaves - of induced or parasite currents on the interface with the polymer, a phenomenon commonly known as interfacial polarization.

As a matter of fact, it should be remembered that hot melt adhesives are made of polymers generally without polar groups and are therefore basically transparent to microwaves. This transparence to microwaves means that the adhesive cannot be heated up with said radiations, since only polar groups can follow the oscillating electric field generated by microwaves and produce heat through electric dissipation.

The solutions described in US-A-4 906 497 or FR-A-2 555 188 are however disadvantageous because metal powders used as electrically conductive substances should be present in a relatively high percentage by weight with respect to dry hot melt adhesive, generally of 10 to 40%, but also up to 85% by weight, so that heating can take place efficiently.

This large amount of metal particles causes a substantial variation of the chemical-physical and mechanical properties of the adhesive, until the latter strongly resemble those of the metal filler, which results in drawbacks for the use of said adhesive.

WO-A-02/13580 discloses a process for heating a substrate (hot melt adhesive) by means of a microwave radiation, wherein the hot melt adhesive contains ferromagnetic particles having a size in the range of 1 to 5000 nm.

US-A-5 925 166 discloses a process for obtaining an iron powder, optionally containing nickel and/or cobalt, comprising the steps of: i) introducing an iron precursor into a basic solution of polyol, ii) heating the mixture for obtaining an iron precipitate and iii) recovering the precipitate.

International patent application WO-A-02/13580 describes as metal powders to be used as electrically conductive substances (also known as fillers) of a holt melt adhesive ferromagnetic metal particles that can be heated at the temperature required by the thermoadhesive matrix to pass from solid to liquid viscous state by microwave irradiation, exploiting heat development of said particles during hysteresis loss.

Ferromagnetic metal particles used in the solution described in the international patent application described above, however, do not have such a morphologic and dimensional regularity to enable a maximization of the hysteresis cycle and therefore a maximization of heat development.

The present invention aims at providing a process for producing a hot melt adhesive that can be activated with microwaves, without the drawbacks described above. The present invention further relates to a hot melt adhesive obtained directly by said process.

According to the invention, said aim is achieved thanks to the solution specifically referred to in the following claims. The dependent claims set out specific embodiments of the invention.

The invention will now be described in detail by mere way of non-limiting example, with reference to the accompanying figures in which:
- Figures 1a and 1b show spherical cobalt particles with an average size of 1.3 microns (photograph taken with a scanning electron microscope);
- Figure 2 shows sub-micrometric cobalt particles (photograph taken with a scanning electron microscope);
- Figure 3 shows sub-micrometric iron particles (photograph taken with a scanning electron microscope).

The present invention in the currently preferred embodiment relates to a process for producing a hot melt adhesive that can be activated with microwaves, in which the thermoadhesive matrix is mixed with ferromagnetic metal powders obtained with the polyol process ["Fine Particles" edited by T. Sugimoto New York-Basel (2000) pages 460-496].

The term "polyol process" refers to a process based on the hot reduction of ionic metal precursors by means of polyfunctional alcohols (polyols), comprising the following steps:
i) mixing a polyol with a metal precursor of the metal constituting the concerned metal particles;
ii) heating the mixture obtained from step i); and
iii) separating metal particles obtained from step ii) .

For reasons basically related to the cost of ferromagnetic metals to be used as electrically conductive substance or filler for hot melt adhesive, the choice has to be made on the elements of the triad iron, cobalt and nickel. The use of other metals with better magnetic properties (higher magnetic susceptibility), such as rare earths or also particular binary or ternary alloys based on elements of the triad of iron and lanthanides (SmCo, NdFeB, etc.) is very difficult for reasons related to their high cost. Conversely, the use of ferromagnetic ceramic particles (e.g. ferrite, boehmite, magnetite, etc.) is less advantageous due to their worse magnetic properties.

Composite materials made of dispersions of metal powders into thermoadhesive or thermoplastic polymeric matrixes can strongly absorb electromagnetic waves producing heat. The amount of heat developing in metal inclusions in the presence of an electromagnetic field depends on the nature, percentage in the composite material and morphology of the metal particles, but it is always so high as to bring the thermoadhesive or thermoplastic polymeric matrix rapidly to temperatures above its glass transition temperature (Tg) or, in case of a semicrystalline matrix, above its melting temperature (Tₘ) , thus allowing its change to a liquid state under conditions of low viscosity.

The Applicant has surprisingly found that the maximum amount of heat is developed in hot melt adhesives by ferromagnetic metal particles, such as for instance powders of iron, cobalt, nickel or alloys thereof (Co-Ni, Fe-Ni, Fe-Co, Fe-CO-Ni), when said ferromagnetic particles are produced by using the polyol process. As a matter of fact, said process enables to obtain metal powders with extremely fine granulometry, made up of spherical particles or anyhow with a regular shape (needle-shaped or disc-shaped), which are not agglomerated and have a controlled size.

The Applicant has surprisingly found that the polyol process, and in particular if suitably modified (for instance by addition of oleic acid) and controlled (for instance with a suitable amount of metal precursor), turns into a valid synthesis process for obtaining ferromagnetic particles which are able to dissipate electromagnetic radiation whose frequency is in the field of microwaves (by maximizing the hysteresis cycle of each individual particle) much more efficiently than what has been proposed up to now by the prior art.

As a matter of fact, the polyol process enables an easy control of the polydispersion degree in synthesized powders, thus ensuring a system made up of monodisperse and morphologically identical particles.

The hot melt adhesive filled with the ferromagnetic particles thus produced, when activated by microwaves, will reach the softening temperature in an easy and homogeneous manner.

By way of conclusion, the polyol process - if necessary, with the changes proposed by the Applicant - enables to produce ferromagnetic particles to be used as fillers for hot melt adhesives whose properties are surprisingly better than known products. Moreover, it is a simple synthesis process, which can be easily scaled and which is certainly more advantageously than processes of physical synthesis that do not enable to obtain particles with suitable size (100-600 nm); moreover, it is the most advantageous process among chemical processes and ensures a quantitative production of regular ferromagnetic powders that could not be obtained otherwise, beyond being economically more advantageous than what has been proposed up to now.

As was already mentioned, the polyol process is based on the reduction of ionic metal precursors by means of boiling polyfunctional alcohols (polyols).

The metal precursor can be both an inorganic polyol-soluble compound (e.g. a nitrate, a chloride or an acetate) and an inorganic compound that is insoluble or only slightly soluble in polyol (e.g. an oxide, a hydroxide or a salt).

The average size of particles produced with the polyol process is given by the amount of metal precursor used in the process, and namely it decreases linearly with the reduction of the amount of precursor. In particular, in the case of cobalt particles obtained by reduction of hydroxide (Co(OH)₂) with ethylene glycol, by reducing the concentration of Co(OH)₂ from 0,22 mol/dm³ to 0,027 mol/dm³ the average radius of particles changes from 1,4 microns to 300 microns. Higher hydroxide concentrations result in monodisperse cobalt particles with a proportionally greater radius, whereas hydroxide concentrations below 0,020 mol/dm³ do not result in the formation of precipitate in a reaction period of 25 minutes.

Commonly used polyols are both liquid α-diols, such as 1,2-ethanediol (ethylene glycol, EG) or 1,2-propanediol (propylene glycol, PEG), and diol ethers resulting from the condensation of these α-diols, such as for instance diethylene glycol (DEG), triethylene glycol (TEG) or tetraethylene glycol (TTEG).

The solution or suspension of metal precursor in polyol is stirred powerfully and heated up to a given temperature, often corresponding to the boiling point of polyol.

In this process polyol acts at the same time as solvent, reducing agent, growing agent for metal particles and eventually as protective agent.

The reaction goes on through precursor dissolution, formation of an intermediate phase, reduction of dissolved ions and nucleation-growth of metal particles.

Liquid polyols are particularly useful non-aqueous solvents, since like water and simple alcohols they can build hydrogen bonds with high permittivity values and can therefore easily dissolve a wide variety of ionic solids. Moreover, reductions carried out with said solvents can take place at much higher temperatures than those allowed with water and alcohols without increasing pressure.

As far as quantitative reduction of cobalt and nickel ions to elementary metal is concerned, the reaction is carried out in boiling polyols (EG, DEG, EG+DEG mixtures). Temperature is as a rule of 180°C to 220°C.

Thanks to the low tendency of metal particles to coalesce during the growth step, the reaction can be carried out (not according to the instant invention) also without protective agents, but the best results can be obtained by adding small amounts of oleic acid to reaction environment. Other protective agents that can be used according to the present invention are sodium bis(2-ethylhexyl)sulfosuccinate (AOT), lauryl sulfate and sodium oleate.

Whatever the metal precursor used, there is always the formation of an intermediate solid phase, which according to diffractometric (XRD) and spectrophotometric (FT-IT) analyses has a lamellar structure, not completely regular (turbostratic structure) comprising parallel equidistant planes resembling those of the lamellar structure of nickel or cobalt hydroxides. These planes are oriented at random and alternated to polyol molecules, whereas hydroxide ions are partially replaced by alkoxide ions. The dissolution of this intermediate solid phase, which acts as reserve of metal ions M(II), adjusts the concentration of these species in the system and thus plays a key role in the formation of metal particles and therefore of their final properties.

Ferromagnetic powders that can be used as fillers for the compositions of hot melt adhesives obtained with the process according to the present invention comprise basically particles of ferromagnetic metals with micrometric or sub-micrometric size; this size should be used, as was already mentioned, so as to enhance coercivity of said metal particles, i.e. increasing the phenomena of heat loss by hysteresis [G. Viau et al. "Preparation and microwave characterization of spherical and monodisperse Co-Ni particles" J. Magn. Magn. Mater. 140 (1995) 377-378].

Ferromagnetic powders to be used as fillers for the compositions of hot melt adhesives obtained with the process according to the present invention should further be aggregated and are preferably surface passivated so as to i) prevent the phenomenon involving surface oxidation-contamination and aggregation of particles, ii) let the latter be dispersed more easily into the apolar thermoadhesive matrix, and iii) improve interfacial properties of the composite material.

Ferromagnetic metal particles produced according to the present invention shall have a diameter of some dozens of microns, preferably below 50 microns, or more preferably below 20 microns, or they shall have a sub-micrometric size, i.e. of 500 nm to 1 micron, or more preferably of 200 nm to 1 micron.

By using ferromagnetic particles with a size of a few microns or less, the amount of heat generated by the hysteresis cycle is far larger than the amount of heat generated by electric conduction, which phenomenon is very slight under these circumstances. It can even be supposed that electric phenomena disappear almost completely when metal particles with a size below 50 microns are used.

Moreover, the use of particles with micrometric or sub-micrometric size enables to achieve a homogeneous distribution of these particles inside the thermoadhesive matrix of the adhesive, and therefore to obtain a uniform heating inside the whole adhesive mass used.

Ferromagnetic particles shall preferably have a regular shape (spherical, needle-shaped or disk-shaped). Needle or disk shape is preferred since magnetic anisotropy is increased with respect to a spherical shape, obtaining a more efficient hysteresis cycle, thus characterized by a higher heat production.

Ferromagnetic metal particles obtained with the process according to the present invention and used as fillers for hot melt adhesives are generally present in very small amounts, as a rule in a percentage by weight with respect to dry adhesive below 20%, preferably below 10%, so as to leave the chemical-physical and mechanical properties of the adhesive almost unchanged. The amount of ferromagnetic particles should however be above 0,1%, preferably above 1% by weight with respect to dry adhesive.

The following are some examples describing the preparation of cobalt, nickel and iron ferromagnetic metal particles with micrometric or sub-micrometric size according to the present invention.

### Example 1. Synthesis of cobalt metal particles

Cobalt particles with micrometric size were obtained by reduction of cobalt (II) ions.

Cobalt hydroxide (Co(OH)₂, Aldrich 99.8%) and diethylene glycol (DEG) (O(CH₂CH₂OH)₂, Aldrich 98%) were used as metal precursor and reducing agent, respectively. These reagents were not purified before use.

Co(OH)₂ powder (4 g), which is little soluble in glycol, was carefully dispersed into a small amount (about 10 ml) of DEG using a sonicating bath. This amount was rapidly added to 400 ml of DEG at reflux temperature (245°C), in which 1 ml of oleic acid was dissolved. After 20 min the reactive mixture turned to a dark color because of metal reduction to its elementary state, and the reaction was stopped by cooling.

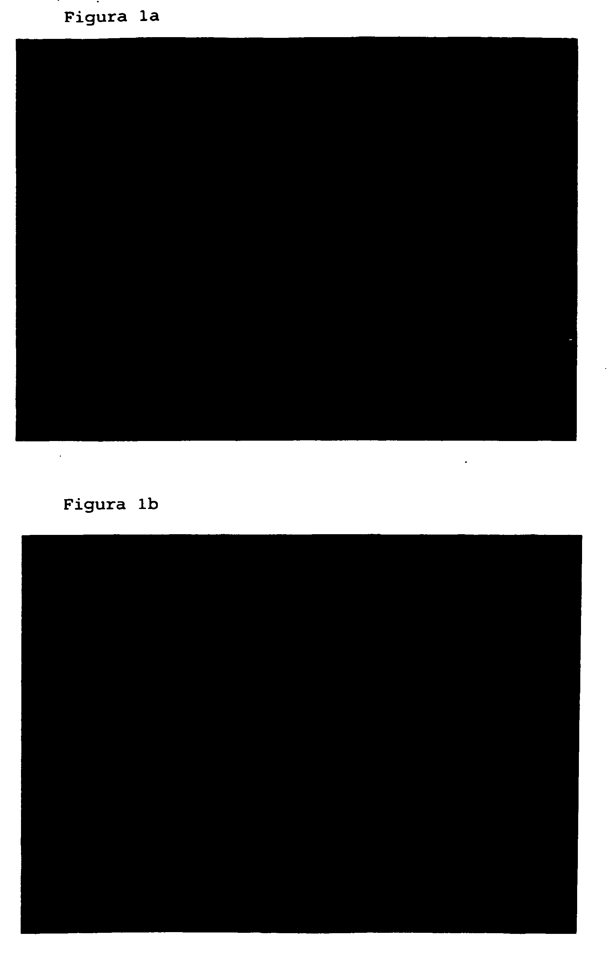

In order to prevent metal oxidation, the reaction was carried out in nitrogen atmosphere. At the end of the reaction a monodisperse sample of spherical cobalt particles was obtained (see Figures 1a and 1b), which particles had an average size of 1.3 microns (σ = 3%).

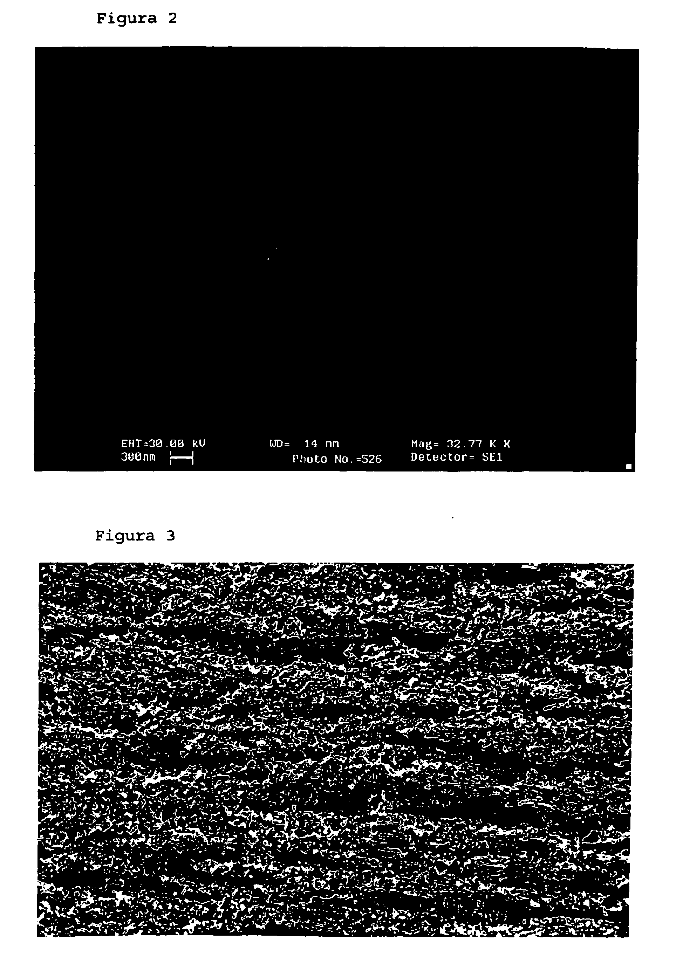

By reducing the amount of precursor to 1 g, sub-micrometric cobalt particles were obtained (see Figure 2).

### Example 2. Synthesis of nickel metal particles

Micrometric nickel particles were obtained by reduction of nickel (II) ions.

In particular, nickel hydroxide (Ni(OH)₂, Aldrich 99.8%) and diethylene glycol (DEG) (O(CH₂CH₂OH)₂, Aldrich 98%) were used as metal precursor and reducing agent, respectively. These reagents were not purified before use.

Ni(OH)₂ powder (4 g) was carefully dispersed into a small amount (about 10 ml) of DEG using a sonicating bath. This amount was rapidly added to 400 ml of DEG at reflux temperature (280°C), in which 1 ml of oleic acid was dissolved. After 20 min the reactive mixture turned to a dark color because of the formation of elementary metal, and the reaction was stopped by cooling.

In order to prevent metal oxidation, the reaction was carried out in nitrogen atmosphere.

### Comparative Example 3. Synthesis of iron metal particles

The reaction was carried out by adding to a concentrated solution of sodium hydroxide in ethylene glycol (3,2 g of NaOH in 35 ml of ethylene glycol), adjusted to a temperature 120-140°C, a solution of ferrous sulfate (2,09 g of FeSO₄·7 H₂O) in 5 ml of ethylene glycol).

The reaction was carried out under magnetic stirring in an inert atmosphere for about one hour.

At the end of the process a black suspension, stable for days, was obtained. The metal powder was separated magnetically and washed several times with ethanol, then passivated by treatment with oleic acid (see Figure 3).

## Claims

1. A process for preparing a hot melt adhesive to be activated by microwaves, comprising a thermoadhesive phase and a phase of microwave-sensible ferromagnetic metal particles, said process comprising the following steps:
a) preparation of a thermoadhesive matrix;
b) preparation of ferromagnetic metal particles by means of the following steps:
i) mixing a polyol with at least a metal precursor of the metal(s) constituting the metal particles and adding a protective agent;
ii) heating the mixture obtained from step i); and
iii) separating metal particles obtained from step ii);
c) mixing the thermoadhesive matrix with the ferromagnetic metal particles so obtained.

2. The process according to claim 1, **characterized in that** metal particles are made of a ferromagnetic metal chosen from the groups comprising iron, cobalt, nickel or alloys thereof.

3. The process according to claim 2, **characterized in that** the metal precursor is an iron, cobalt or nickel inorganic compound.

4. The process according to claim 3, **characterized in that** the metal precursor is present in an amount above 0,020 mol/dm³.

5. The process according to claim 4, **characterized in that** the metal precursor is present in an amount of between 0,020 and 0,4 mol/dm³.

6. The process according to claim 1, **characterized in that** the polyol is chosen among α-diols and diol ethers.

7. The process according to claim 4 or 5, **characterized in that** the polyol is chosen from the group comprising 1,2-ethanediol, 1,2-propanediol, diethylene glycol, triethylene glycol and tetraethylene glycol.

8. The process according to claim 1, **characterized in that** the protective agent is chosen from the groups comprising oleic acid, sodium bis(2-ethylhexyl)sulfosuccinate (AOT), lauryl sulfate and sodium oleate.

9. The process according to claim 1, **characterized in that** heating in step ii) takes places at a temperature of 100 to 300°C.

10. The process according to any of the preceding claims, **characterized in that** the process for producing metal particles comprises a further step iv) in which metal particles obtained in step iii) are passivated.

11. A hot melt adhesive to be activated with microwaves comprising a thermoadhesive phase and a phase of microwave-sensible ferromagnetic metal particles, obtained with the process according to any of the claims 1 to 10, **characterized in that** the metal particles have a regular shape, in the form of *sphere,* needle or disk.

12. The adhesive according to claim 11, **characterized in that** metal particles have a size below 50 microns, preferably below 20 microns, still more preferably below 1 micron.

13. The adhesive according to claim 12, **characterized in that** metal particles have a size of 500 nm to 1 micron, preferably of 200 nm to 1 micron.

14. The adhesive according to any of the claims 11 to 13, **characterized in that** metal particles are present in a percentage by weight with respect to dry adhesive below 20%, more preferably below 10%.

15. The adhesive according to any of the claims 11 to 14, **characterized in that** metal particles are present in a percentage by weight with respect to dry adhesive above 0.1%, more preferably above 1%.

## Patentansprüche

1. Verfahren zur Herstellung eines Heißklebers, welcher durch Mikrowellen aktivierbar ist, umfassend eine thermoadhäsive Phase und eine Phase aus mit Mikrowellen beeinflussbaren ferromagnetischen Metallpartikeln, wobei das Verfahren die folgenden Schritte umfasst:
a) Herstellen einer thermoadhäsiven Matrix;
b) Herstellen von ferromagnetischen Metallteilchen mittels der folgenden Schritte:
i) Mischen eines Polyols mit wenigstens einem Metallvorläufer mit dem wenigstens einem Metall, welches die Metallpartikel bildet und Zugeben eines Schutzmittels;
ii) Erwärmen der in Schritt i) erhaltenen Mischung; und
iii) Trennen der im Schritt ii) erhaltenen Metallpartikel;
c) Mischen der thermoadhäsiven Matrix mit den so erhaltenen ferromagnetischen Metallpartikeln.

2. Verfahren nach Anspruch 1, **dadurch gekennzeichnet, dass** die Metallpartikel aus einem ferromagnetischen Metall hergestellt sind, gewählt aus der Gruppe umfassend Eisen, Kobalt, Nickel und deren Legierungen.

3. Verfahren nach Anspruch 2, **dadurch gekennzeichnet, dass** der Metallvorläufer eine anorganische Eisen-, Kobalt- oder Nickelverbindung ist.

4. Verfahren nach Anspruch 3, **dadurch gekennzeichnet, dass** der Metallvorläufer in einer Menge oberhalb von 0,020 mol/dm³ vorhanden ist.

5. Verfahren nach Anspruch 4, **dadurch gekennzeichnet, dass** der Metallvorläufer in einer Menge von zwischen 0,020 und 0,4 mol/dm³ vorhanden ist.

6. Verfahren nach Anspruch 1, **dadurch gekennzeichnet, dass** das Polyol aus α-Diolen und Dioläthern ausgewählt ist.

7. Verfahren nach Anspruch 4 oder 5, **dadurch gekennzeichnet, dass** das Polyol aus der Gruppe ausgewählt ist, umfassend 1,2-Ethandiol, 1,2-Propandiol, Diethylenglycol, Triethylenglycol und Tetraethylenglycol.

8. Verfahren nach Anspruch 1, **dadurch gekennzeichnet, dass** das Schutzmittel gewählt ist aus der Gruppe umfassend Oleinsäure, Natriumbis(2-Ethylhexyl)-Sulfosuccinat (AOT), Laurylsulfat und Natriumoleat.

9. Verfahren nach Anspruch 1, **dadurch gekennzeichnet, dass** das Erwärmen in Schritt ii) bei einer Temperatur von 100 bis 300°C stattfindet.

10. Verfahren nach einem der vorangehenden Ansprüche, **dadurch gekennzeichnet, dass** das Verfahren zur Herstellung der Metallpartikel einen weiteren Schritt iv) umfasst, wobei die in Schritt iii) erhaltenen Metallpartikel passiviert sind.

11. Heißkleber, welcher mit Mikrowellen aktivierbar ist, umfassend eine thermoadhäsive Phase und eine Phase aus mikrowellensensiblen ferromagnetischen Metallpartikeln, erhalten durch das Verfahren gemäß einem der Ansprüche 1 bis 10, **dadurch gekennzeichnet, dass** die Metallpartikel eine regelmäßige Form aufweisen, in der Form von Kugeln, Nadeln oder Scheiben.

12. Klebstoff nach Anspruch 11, **dadurch gekennzeichnet, dass** die Metallpartikel eine Größe unter 50 µm, vorzugsweise unter 20 µm, noch bevorzugter unter 1 µm aufweisen.

13. Verfahren (Klebstoff) nach Anspruch 12, **dadurch gekennzeichnet, dass** die Metallpartikel eine Größe von 500 nm bis 1 µm aufweisen, vorzugsweise von 200 nm bis 1 µm.

14. Klebstoff nach einem der Ansprüche 11 bis 13, **dadurch gekennzeichnet, dass** die Metallpartikel in einem Gewichtsprozentanteil unter 20, vorzugsweise unter 10 in Bezug auf den trockenen Klebstoff vorhanden sind.

15. Klebstoff nach einem der Ansprüche 11 bis 14, **dadurch gekennzeichnet, dass** die Metallpartikel in einem Gewichtsanteil oberhalb von 0,1, noch bevorzugter oberhalb von 1 % in Bezug auf den trockenen Klebstoff vorhanden sind.

## Revendications

1. Procédé de préparation d'un adhésif thermocollant pouvant être activé par des micro-ondes, comprenant une phase thermoadhésive et une phase de particules de métal ferromagnétique sensibles aux micro-ondes, ledit procédé comprenant les étapes suivantes :
a) préparation d'une matrice thermoadhésive ;
b) préparation de particules de métal ferromagnétique au moyen des étapes suivantes consistant à :
i) mélanger un polyol avec au moins un précurseur de métal du (des) métal (métaux) constituant les particules de métal et *ajoute* un agent protecteur ;
ii) chauffer le mélange obtenu dans l'étape i) ; et
iii) séparer les particules de métal obtenues dans l'étape ii) ;
c) mélange de la matrice thermoadhésive avec les particules de métal ferromagnétique ainsi obtenues.

2. Procédé selon la revendication 1, **caractérisé en ce que** les particules de métal sont constituées d'un métal ferromagnétique choisi dans le groupe comprenant le fer, le cobalt, le nickel ou leurs alliages.

3. Procédé selon la revendication 2, **caractérisé en ce que** le précurseur de métal est un composé inorganique de fer, de cobalt ou de nickel.

4. Procédé selon la revendication 3, **caractérisé en ce que** le précurseur de métal est présent dans une quantité supérieure à 0,020 mol/dm³.

5. Procédé selon la revendication 4, **caractérisé en ce que** le précurseur de métal est présent dans une quantité comprise entre 0,020 et 0,4 mol/dm³.

6. Procédé selon la revendication 1, **caractérisé en ce que** le polyol est choisi parmi les α-diols et les diol éthers.

7. Procédé selon la revendication 4 ou 5, **caractérisé en ce que** le polyol est choisi dans le groupe comprenant le 1,2-éthanediol, le 1,2-propanediol, le diéthylène glycol, le triéthylène glycol et le tétraéthylène glycol.

8. Procédé selon la revendication 1, **caractérisé en ce que** l'agent protecteur est choisi dans le groupe comprenant l'acide oléique, le bis(2-éthylhexyl)sulfosuccinate de sodium (AOT), le lauryl sulfate et l'oléate de sodium.

9. Procédé selon la revendication 1, **caractérisé en ce que** le chauffage de l'étape ii) a lieu à une température de 100 à 300 °C.

10. Procédé selon l'une quelconque des revendications précédentes, **caractérisé en ce que** le procédé de production de particules de métal comprend l'étape supplémentaire iv) dans laquelle les particules de métal obtenues dans l'étape iii) sont passivées.

11. Adhésif thermocollant pouvant être activé par des micro-ondes comprenant une phase thermoadhésive et une phase de particules de métal ferromagnétique sensibles aux micro-ondes, obtenues par le procédé selon l'une quelconque des revendications 1 à 10, **caractérisé en ce que** les particules de métal ont une forme régulière, sous la forme d'une *sphère,* d'une aiguille ou d'un disque.

12. Adhésif selon la revendication 11, **caractérisé en ce que** les particules de métal ont une taille inférieure à 50 microns, de préférence inférieure à 20 microns, de manière encore davantage préférée inférieure à 1 micron.

13. Adhésif selon la revendication 12, **caractérisé en ce que** les particules de métal ont une taille de 500 nm à 1 micron, de préférence de 200 nm à 1 micron.

14. Adhésif selon l'une quelconque des revendications 11 à 13, **caractérisé en ce que** les particules de métal sont présentes dans un pourcentage en poids par rapport à l'adhésif sec inférieur à 20 %, de manière davantage préférée inférieur à 10 %.

15. Adhésif selon l'une quelconque des revendications 11 à 14, **caractérisé en ce que** les particules de métal sont présentes dans un pourcentage en poids par rapport à l'adhésif sec supérieur à 0,1 %, de manière davantage préférée supérieur à 1 %.
